Europäisches Patentamt

European Patent Office

Office européen des brevets

(19)

(11) Veröffentlichungsnummer : **0 129 717**
**B1**

(12) **EUROPÄISCHE PATENTSCHRIFT**

(45) Veröffentlichungstag der Patentschrift :
**30.12.86**

(21) Anmeldenummer : **84105865.4**

(22) Anmeldetag : **23.05.84**

(51) Int. Cl.⁴ : **F 16 B 23/00**

(54) **Vorrichtung zum Drehen und Axialbewegen von Bolzen.**

(30) Priorität : **25.05.83 DE 3318941**

(43) Veröffentlichungstag der Anmeldung :
**02.01.85 Patentblatt 85/01**

(45) Bekanntmachung des Hinweises auf die Patenterteilung : **30.12.86 Patentblatt 86/52**

(84) Benannte Vertragsstaaten :
**AT BE CH DE FR GB IT LI NL SE**

(56) Entgegenhaltungen :
**WO-A-80 /006 72**
**BE-A-   684 086**
**DE-A- 2 113 933**
**DE-A- 2 822 382**
**DE-B- 1 156 718**
**DE-C-   243 352**
**DE-C-   730 710**
**DE-C-   918 980**
**US-A- 4 094 350**
**US-A- 4 118 849**
**US-A- 4 339 971**

(73) Patentinhaber : **Wirth Maschinen- und Bohrgeräte-**
**Fabrik GmbH**
**Kölner Strasse 71-78**
**D-5140 Erkelenz (DE)**

(72) Erfinder : **Ecker, Karl-Heinz**
**Wilhelmstrasse 38**
**D-5140 Erkelenz (DE)**
Erfinder : **Hoffmann, Erhard**
**Kapellenstrasse 11**
**D-5142 Hückelhoven 2 (DE)**

(74) Vertreter : **Koscholke, Gotthold, Dr.-Ing.**
**Rheinallee 147**
**D-4000 Düsseldorf 11 (DE)**

## Beschreibung

Die Erfindung bezieht sich auf eine Vorrichtung zum Drehen und zumindest zeitweise gleichzeitigen Axialbewegen großer bzw. schwerer Schraubenbolzen, die zur lösbaren Befestigung von Deckeln oder anderen Verschlußteilen bei Druckbehältern, Reaktorgefäßen od. dgl. dienen und jeweils mit einem Ende in ein Aufnahmeloch einfügbar, namentlich in eine Gewindebohrung einschraubbar sind, und außerdem ein Gewinde zum Aufschrauben einer Befestigungsmutter aufweisen, wobei am Endteil des Schraubenbolzens eine von seiner Stirnseite her zugängliche Kammer vorgesehen ist, in die der Kopf eines drehend antreibbaren und axial verschiebbaren Kuppelteiles in Axialrichtung des Schraubenbolzens einführbar ist, und wobei am Endteil des Schraubenbolzens axiale und radiale Widerlager für den Kopf des Kuppelteiles vorhanden sind.

Schraubenverbindungen an Flanschen, Deckeln, Verschlüssen u. dgl. von Druckbehältern, Reaktorgefäßen od. dgl. sind vielfach so gestaltet, daß die stirnseitige Abschlußfläche oder ein Flansch eines Gefäßes auf einem Lochkreis angeordnete Gewindebohrungen aufweist, in die nach Art von Stiftschrauben ausgebildete Schraubenbolzen mit ihren Enden eingeschraubt werden. Die Bolzen gehen durch entsprechende Löcher im Flansch eines Deckels hindurch, der auf das Gefäß aufgesetzt wird.

Auf Gewinde an den vorstehenden Teilen der Bolzen werden Befestigungsmuttern aufgeschraubt, so daß die gewünschte Verbindung der Teile entsteht. Bei solchen und ähnlichen Verbindungen besteht häufig die Notwendigkeit, die Schraubarbeitsgänge beim Einschrauben der Bolzen in ihre Aufnahmegewinde bzw. beim Ausschrauben aus den letzteren mit möglichst geringem Einsatz an manueller Arbeit durch geeignete Vorrichtungen ausführen zu lassen. Dies gilt besonders für große und schwere Schraubenbolzen und für solche Schraubenverbindungen, die in Gefahrenbereichen liegen, wie etwa bei Kernreaktoren. Um Beschädigungen des Gewindes beim Ausschrauben bzw. Einschrauben zu verhindern, ist es weiterhin erwünscht oder erforderlich, während des Drehens eine axiale Zugkraft aufzubringen, die nach Möglichkeit das volle Gewicht des Bolzens kompensieren kann, so daß das Gewinde entsprechend entlastet ist.

Um dies zu erreichen, muß ein Kupplungssystem vorhanden sein, welches in der Lage ist, ein von einem Antrieb geliefertes Drehmoment und eine von einer weiteren Einrichtung gelieferte Zugkraft auf den Bolzen zu übertragen. Dabei besteht meist auch die Forderung, daß das Kuppelsystem vollständig vom Bolzen gelöst und auch wieder mit ihm verbunden werden kann, je nachdem, wie es die Umstände verlangen.

Bisher wurden für solche Zwecke verschiedene, an mehreren äußeren Stellen des Bolzens zum Angriff kommende Elemente verwendet. Dabei mußte der Bolzen entsprechende Profilierungen für Verriegelungsteile, zum Ansetzen von Schlüsseln usw. aufweisen.

Aus der US-A-4 304 156 ist eine Vorrichtung zum Anbringen von Verschlüssen bei Kernreaktor-Gefäßen bekannt, bei der ein Schraubenbolzen einen stirnseitig zugänglichen Hohlraum aufweist, in den ein Kuppelteil einführbar ist. Am unteren Ende des Kuppelteiles befinden sich Kugeln, die in radialer Richtung bewegbar sind und in ausgeschobener Position an einer Begrenzung des Hohlraumes im Sinne eines axialen Widerlagers Abstützung finden können. Dazu muß ein besonderer Betätigungsmechanismus für die Kugeln vorhanden sein. Getrennt davon ist oberhalb des Hohlraumes eine keilwellenartige Verbindung mit dem Kuppelteil zur Drehmomentübertragung vorgesehen.

Aufgabe der Erfindung ist es, bisher bestehenden Schwierigkeiten zu begegnen und eine vorteilhafte und auch für besondere Anwendungsfälle der Praxis geeignete Vorrichtung der eingangs genannten Art zu schaffen, die außerdem auch bestehenden Richtlinien und Vorschriften genügt, wie sie für spezielle Anlagen bestehen. Die Erfindung strebt dabei außerdem eine zweckmäßige und einfache Ausbildung der Vorrichtung im einzelnen an. Weitere damit zusammenhängende Probleme, mit denen sich die Erfindung befaßt, ergeben sich aus der jeweiligen Erläuterung der aufgezeigten Lösung.

Gemäß der Erfindung kennzeichnet sich die Vorrichtung durch folgende Merkmale :

der Kopf des Kuppelteiles weist eine hammerkopfartige Ausbildung mit wenigstens einem festen, quer zur Längsachse vorstehenden Ansatz auf ;

die axialen und radialen Widerlager für den Kopf bzw. Ansatz des Kuppelteiles sind innerhalb der Kammer vorgesehen ;

ein erstes radiales Widerlager erstreckt sich im wesentlichen über die ganze Höhe der Kammer und ein zweites radiales Widerlager erstreckt sich nur über einen Teil der Höhe der Kammer in deren oberem Bereich, wobei die Widerlager einen das Einführen eines Ansatzes des Kopfes des Kuppelteiles zwischen sich zulassenden Abstand voneinander haben.

Bei einer solchen Vorrichtung wird das Ende des Bolzens genutzt, um eine das Einleiten von Drehmomenten und axialen Kräften ermöglichende Verbindung herzustellen. Außenseitig bleibt der Bolzen hiervon unbeeinflußt, so daß er dort so ausgebildet werden kann, wie es dem jeweiligen Anwendungsfall am besten entspricht. Der erfinderische Grundgedanke ist darin zu sehen, den Kuppelteil mit seinem Kopf in die Kammer eintauchen zu lassen und dann durch eine Drehung und eine Verschiebung, wobei diese beiden Bewegungen auch kombiniert oder überlagert sein können, in eine verriegelte Betriebsposition zu bringen, in der die Übertragung von Drehmomenten und Axialkräften erfolgen kann. Ein radiales Widerlager kann somit auch durch die Seitenfläche einer in der Kammer vorhandenen Nut od. dgl. gebildet sein. Ein axiales Widerlager ergibt sich durch einen in die Kammer vorstehenden oder diese zum Teil abschließenden Vorsprung od. dgl. an dem eine Fläche des Kopfes oder Ansatzes des Kuppelteiles zur Anlage kommen kann. Die Ausbildung läßt sich namentlich auch nach Art eines Bajonettverschlusses treffen.

In manchen Anwendungsfällen kann es genügen, nur einen nach einer Seite hin gerichteten Ansatz am Kopf des Kuppelteiles vorzusehen. Vorteilhaft sind aber zwei nach entgegengesetzten Seiten weisende Ansätze vorhanden. Besonders günstig ist eine hammerkopfartige Ausbildung.

Die Kammer ist bei einer zweckmäßigen Ausführung durch einen stirnseitigen Abschlußteil begrenzt, der eine ein axiales Hindurchführen des Kopfes des Kuppelteiles nur in bestimmter Winkelorientierung mit Bezug auf die Längsachse des Kuppelteiles oder des Schaftes gestattende Öffnung aufweist. Ein solcher Abschlußteil, der insbesondere ein axiales Widerlager für den Kopf des Kuppelteiles bildet, kann mit dem Ende des Bolzens aus einem Stück bestehen oder aber auch als gesonderter Teil hergestellt sein und dann mit dem Bolzen verbunden werden, sei es lösbar, sei es fest.

Bei einer sehr einfachen und auch für die Fertigung günstigen Ausführung ist zumindest ein radiales Widerlager von einem Stift od. dgl. gebildet.

Die Erzeugung einer Drehbewegung und einer Axialkraft, die über den Kuppelteil auf den Bolzen zu übertragen sind, kann auf verschiedene Weise geschehen. Auch für die Einleitung der Drehmomente und Kräfte in den Kuppelteil selbst bestehen mehrere Möglichkeiten.

Bei einer vorteilhaften Ausgestaltung weist der Kuppelteil einen sich an den Schaft anschließenden Körper mit einem Außenprofil auf, der in einen drehend antreibbaren Mitnahmering mit in das Außenprofil des Körpers passendem Innenprofil einschiebbar ist, wobei die Öffnung des Mitnahmeringes so groß ist, daß sie ein Hindurchtreten des Kopfes des Kuppelteiles gestattet.

Die erfindungsgemäße Vorrichtung kann als Handhabungs- oder Betätigungsvorrichtung für einen einzigen Bolzen ausgebildet sein oder auch in Mehrfachanordnung zur gleichzeitigen Handhabung mehrerer Bolzen ausgeführt sein. Sie läßt sich insbesondere mit einer Schraubenspannvorrichtung kombinieren, wie solche in verschiedenen Ausführungen bekannt sind. Weiterhin kommt die erfindungsgemäße Vorrichtung nicht nur für Schraubenbolzen in Betracht, sondern auch für Bolzen, die in ihrem Aufnahmeloch eine Festlegung auf andere Weise erfahren, etwa mittels unterbrochener ringförmiger Vorsprünge und Nuten, die mit einem entsprechenden Gegenprofil verriegelt werden können.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen :

Figur 1   das obere Ende eines gemäß der Erfindung ausgebildeten Bolzens im Schnitt nach der Linie I-I in Fig. 2, zusammen mit einem Kuppelteil,

Figur 2   eine Draufsicht zu Fig. 1 mit Schnitt durch den Schaft des Kuppelteiles der Linie II-II in Fig. 1,

Figur 3   eine mit der erfindungsgemäßen Vorrichtung ausgestattete Schraubenspannvorrichtung, teils in Ansicht, teils im Schnitt und

Figur 4   einen Schnitt nach der Linie IV-IV in Fig. 1.

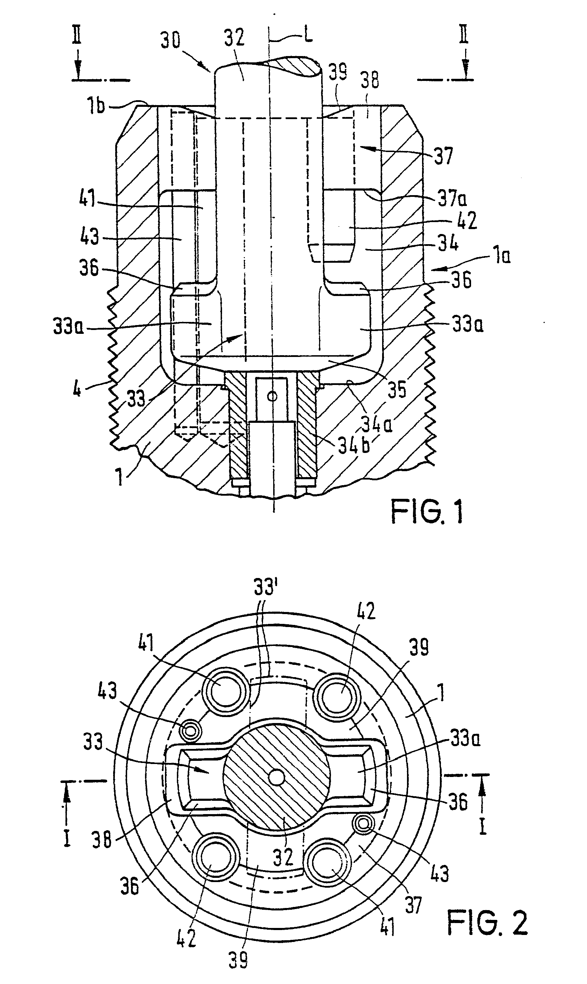

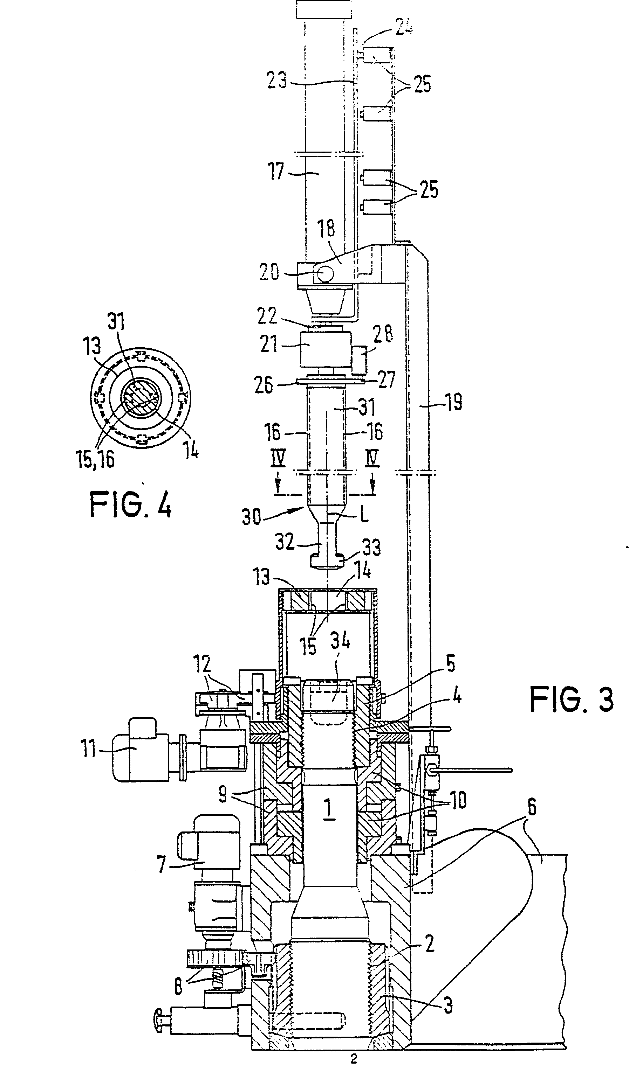

Bei dem Bolzen 1, dessen freies Ende 1a in den Fig. 1 und 2 dargestellt ist, kann es sich insbesondere um einen großen Schraubenbolzen handeln, wie er in größerer Anzahl namentlich bei Flanschen, Deckeln oder ähnlichen Verschlüssen von Druckbehältern, Kesseln, Reaktorgefäßen verwendet wird. Ein solcher nach Art einer Stiftschraube ausgebildeter Schraubenbolzen weist an seinem in der Zeichnung nicht wiedergegebenen Teil ein Außengewinde auf, mit dem er in eine entsprechende Gewindebohrung einschraubbar ist. Auf ein weiteres Gewinde 2 eines solchen Bolzens kann eine Befestigungsmutter 3 (Fig. 3) aufgeschraubt werden, die sich auf die Oberseite eines Flansches oder Deckels auflegt. Zum Vorspannen derartiger Bolzen werden hydraulische Spannvorrichtungen eingesetzt, die z. B. an einer weiteren, auf ein oberes Gewinde 4 des Bolzens 1 aufgeschraubten Mutter 5 angreifen.

Eine als Beispiel in Fig. 3 gezeigte Ausführung einer Spannvorrichtung enthält im wesentlichen einen auf die Oberseite eines Deckelflansches aufsetzbaren Tragkörper 6, einen Antrieb 7, z. B. einen Elektromotor, mit nachgeschalteten Zahnrädern 8 zum Drehen der außen mit einer Verzahnung versehenen Befestigungsmutter 3 auf dem Bolzen 1, weiterhin übereinander angeordnete Spannzylinder 9 mit Stufenkolben 10, von denen sich der obere gegen die Unterseite der auf das Gewinde 4 aufgeschraubten Spannmutter 5 legt, sowie ein Drehantrieb 11, etwa ebenfalls ein Elektromotor, mit nachgeschalteten Zahnrädern 12 und einer außen verzahnten, die Mutter 5 umgebenden Hülse als Drehantrieb für die Spannmutter 5 und zugleich für einen mit gewissem Abstand oberhalb dieser Mutter 5 angeordneten, von Stützen od. dgl. getragenen Mitnahmering 13. In dem letzteren befindet sich eine Öffnung 14 mit einem Innenprofil 15, insbesondere in Form zweier sich diametral gegenüberliegender, axial verlaufender Vorsprünge, Leisten od. dgl., der ein Außenprofil 16, insbesondere Nuten zur Aufnahme von Leisten am Mitnahmering 13, am Körper 31 eines insgesamt mit der Ziffer 30 bezeichneten Kuppelteiles entspricht. Dieses ist in Richtung seiner Längsachse L mittels einer hydraulischen Kolben-Zylinder-Einheit 17 verschiebbar, wodurch der Körper 31 mit seinem Außenprofil 16 zum Eingriff in das Innenprofil 15 des Mitnahmeringes 13 gebracht werden kann. In dieser Eingriffsposition ist der Kuppelteil 30 somit vom Antrieb 11 her drehbar, und zwar sowohl in der einen als auch in der anderen Drehrichtung. Die Kolben-Zylinder-Einheit 17 ist von einer gabelförmigen Halterung 18 an einem mit dem Tragkörper 6 verbundenen Gestell 19 in Zapfen 20 schwenkbar gehalten, kann sich aber nicht um ihre Längsachse L drehen. Mit der Ziffer 21 ist insgesamt eine schematisch angedeutete Verbindungs- und Lageranordnung bezeichnet. Darin ist das obere Ende des Kuppelteiles 30 so gelagert, daß es sich um die Längsachse L drehen kann, und außerdem zur Übertragung axialer Kräfte in beiden Richtungen mit dem Ende einer Kolbenstange 22 der doppeltwirkenden Kolben-Zylinder-Einheit 17 verbunden. An der Kolbenstange 22 ist eine Nockenleiste 23 mit einem oder mehreren einstellbaren Nocken 24 angebracht, zur Betätigung von Schaltern 25 in Abhängigkeit von dem Weg, den die Kolbenstange 22 und damit auch der Kuppelteil 30 zurücklegt. Ein am oberen Ende des Körpers 31 befestigtes Zahnrad 26 greift in ein Ritzel 27 eines elektrischen Winkelgebers 28 ein, der an der Verbindungs- und Lageranordnung 21 angebracht ist, so daß er sich mit dieser und dem Kuppelteil 30 axial bewegt. Somit kann durch diesen Winkelgeber 28 jeweils genau die Drehbewegung des Kuppelteiles 30 bzw. dessen jeweilige Winkelposition und durch die Schalter 25 die axiale Bewegung bzw. Position des Kuppelteiles 30 erfaßt und zur Anzeige gebracht sowie zur Steuerung eines gewünschten Ablaufs von Vorgängen weiterverarbeitet und ausgenutzt werden. Dies kann ein programmierter, automatischer Ablauf sein. Die dazu erforderlichen Mittel stehen dem Fachmann zur Verfügung.

An den Körper 31 des Kuppelteiles 30 schließt sich nach unten hin ein z. B. zylindrischer Schaft 32 an, der in einem Kopf 33 endet. Dieser ist bei der gezeigten vorteilhaften Ausführung hammerkopfartig ausgebildet, so daß zwei quer zur Längsachse L des Kuppelteiles 30 bzw. des Schaftes 32 vorstehende Ansätze 33a vorhanden sind. Die Öffnung 14 im Mitnahmering 13 ist so groß, daß der Kopf 33 des Kuppelteiles 30 bei einer axialen Bewegung des letzteren frei hindurchtreten kann.

Wie besonders deutlich die Fig. 1 und 2 zeigen, ist am oberen Ende 1a des Bolzens 1 in diesem eine von der Stirnseite 1b her zugängliche Kammer 34 vorhanden. Diese ist durch einen Abschlußteil 37 begrenzt, der eine Öffnung 38 aufweist, die etwas größer als der Kopf 33 mit dem Schaft 32 ist, aber eine solche Form und Anordnung hat, daß ein axiales Hindurchführen des Kopfes 33 nur in einer bestimmten Winkelorientierung möglich ist, wie dies Fig. 2 deutlich erkennen läßt.

Der Abschlußteil 37, der bei der gezeigten Ausführung mit dem Bolzen 1 aus einem Stück besteht, aber auch gesondert hergestellt und dann mit dem Bolzen verbunden sein kann, weist auf seiner Oberseite abgeschrägte bzw. durch konische Teilflächen gebildete Bereiche 39 auf, die als Führung des Kopfes 33 vor dessen Eintreten in die Öffnung 38 dienen können. Mit der gleichen Zweckbestimmung weist auch der Kopf 33 an seinem unteren Ende bzw. an Teilen seiner Unterseite abgeschrägte Bereiche 35 auf. Zweckmäßig sind außerdem an der Oberseite des Kopfes 33 abgeschrägte Partien 36 vorhanden, die bei der umgekehrten Bewegung das Eintreten in die Öffnung 38 erleichtern können.

Im Inneren der Kammer 34 sind radiale Widerlager für den Kopf 33 bzw. dessen Ansätze 33a derart vorgesehen, daß ein verriegelnder Eingriff der Teile zur Ausführung einer gemeinsamen Bewegung von Kuppelteil 30 und Bolzen 1 ermöglicht wird. Bei der in Fig. 1 und 2 gezeigten vorteilhaften Ausführung werden zwei der Widerlager durch sich über die ganze Höhe der Kammer 34 erstreckende Stifte 41 gebildet, die einander diametral gegenüberliegen (Fig. 2) und mit ihren oberen Enden in Bohrungen des Abschlußteiles 37 und mit ihren unteren Enden in vom Grund 34a der Kammer 34 ausgehenden Bohrungen im Material des Bolzens 1 gehalten sind. Die Stifte können insbesondere in die Bohrungen eingepreßt sein. Zwei weitere, in Bohrungen des Abschlußteiles 37 gehaltene Stifte 42 erstrecken sich nur über einen Teil der Höhe der Kammer 34, wie Fig. 1 zeigt. Auch diese Stifte 42 liegen einander diametral gegenüber. Sie haben jeweils von den Stiften 41 einen horizontalen Abstand, der etwas größer ist als die Breite der Ansätze 33a des Kopfes 33.

Außerdem sind noch zwei dünnere, einander diametral gegenüberliegende, sich über die ganze Höhe der Kammer 34 erstreckende Stifte 43 vorhanden, die ebenso wie die Stifte 41 an ihren Enden gehalten sind. Die Stifte 43 sind jeweils unmittelbar am Rand der Öffnung 38 angeordnet und dienen zusätzlich als Anschlag bzw. zur Führung des Kopfes 33 bei seiner Bewegung. Sie sind nicht unbedingt erforderlich, können aber die Sicherheit erhöhen bzw. den Ablauf erleichtern.

Die Arbeitsweise der beschriebenen Vorrichtung ist wie folgt.

Ausgehend von einer Lage der Teile nach Fig. 3 wird die doppeltwirkende Kolben-Zylinder-Einheit 17 so betätigt, daß sich die Kolbenstange 22 ausschiebt und dadurch der Kuppelteil 30 abwärts bewegt wird. Der Kopf 33 des letzteren tritt dabei frei durch die Öffnung 14 im Mitnahmering 13 hindurch und gelangt sodann an den Bolzen 1. Das Erreichen bestimmter Positionen wird durch zwangsweises Betätigen der Schalter 25 erkennbar gemacht. Steht der Kopf 33 in der richtigen Winkelorientierung über der Öffnung 38 im Bolzenende, wird die Axialbewegung fortgesetzt. Anderenfalls wird zunächst durch langsames Drehen des Kuppelteiles 30 mittels des Antriebs 11 die richtige Orientierung herbeigeführt, wobei zunächst der Körper 31 zum Eingriff mit dem Mitnahmering 13 kommt. Während der Drehung kann die Unterseite des Kopfes 33 auf den Bereichen 39 des Abschlußteiles 37 gleiten. Sodann tritt der Kopf 33 in die Kammer 34 ein. Die weitere Abwärtsbewegung (bei abgeschaltetem Drehantrieb) kann durch Aufsetzen des Kopfes 33 auf den Grund 34a der Kammer 34 bzw. auf eine darin eingesetzte, einem hier nicht näher erläuterten sonstigen Zweck dienende Hülse 34b und einen dadurch bedingten Druckanstieg, insbesondere aber durch Betätigen des untersten der Schalter 25 durch einen Steuerbefehl beendet werden. Damit ergibt sich der Zustand nach Fig. 1 und 2.

Nun wird der Drehantrieb 11 so eingeschaltet, daß sich der Kuppelteil 30 und damit der Kopf 33 im Gegenuhrzeigersinn dreht, bis die in Fig. 2 mit strichpunktierten Linien 33' eingezeichnete Position erreicht ist, was durch Abschalten des Drehantriebs 11 in Abhängigkeit von den Signalen des Winkelgebers 28 bewirkt werden kann. Bei dieser Drehung gehen die Ansätze 33a des Kopfes 33 ungehindert unter den Enden der kürzeren Stifte 42 hinweg. Es schließt sich nun eine Aufwärtsbewegung des Kuppelteiles 30 an, wobei sich die Ansätze 33a des Kopfes 33 jeweils im Bereich zwischen den Stiften 41 und 42 verschieben können, bis die ebenen Teile der Oberseiten der Ansätze 33a zur Anlage an der ebenen Unterseite 37a des Abschlußteiles 37 kommen. Auch das Erreichen dieser Position kann durch einen der Schalter 25 oder durch andere Sensoren od. dgl. gemeldet werden, worauf eine Kommandogabe für den Beginn des Ausschraubvorganges erfolgen kann. Dabei wird der Drehantrieb 11 eingeschaltet und die Kolben-Zylinder-Einheit 17 so mit Druckmittel versorgt, daß eine axiale Aufwärtskraft erzeugt und über den Kopf 33 des Kuppelteiles 30 auf den Bolzen 1 übertragen wird. Durch die Anlage der Seitenflächen des Kopfes 33 an den Widerlagern 41 erfolgt die Drehmomenteinleitung in den Bolzen 1. Dieser wird daher unter Gewichtsentlastung aus seiner Gewindebohrung herausgeschraubt, bis er frei ist und in der Vorrichtung hängt. Er kann dann mit derselben abtransportiert werden.

Das Einschrauben des Bolzens 1 in seine Aufnahmebohrung geschieht sinngemäß in umgekehrter Weise. Dabei wird mittels des Antriebs 11 der Kuppelteil 30 im anderen Sinn gedreht. Durch die Anlage der Seitenflächen der Ansätze 33a an den Widerlagern 42 wird das Drehmoment auf den Bolzen 1 übertragen. Gleichzeitig erfolgt die Gewichtsentlastung durch Zuführen von Druckmittel zu der Kolben-Zylinder-Einheit 17 in der Weise, daß während des Absenkens beim Einschraubvorgang eine nach oben gerichtete Axialkraft von gewünschter Größe aufrechterhalten wird. Nach Beendigung des Einschraubvorganges wird bei abgeschaltetem Antrieb 11 der Kuppelteil 30 abwärts bewegt und dann mit wieder eingeschaltetem Antrieb 11 mit seinem Kopf in die Position nach Fig. 1 und 2 gedreht. Sodann erfolgt das Herausbewegen des Kopfes 33 aus der Kammer 34, beispielsweise. bis die Teile die Position nach Fig. 3 erreicht haben.

Die Stifte 43 können bei dem zuletzt erwähnten Zurückdrehen des Kopfes 33 und beim Anheben desselben als Anschläge und Führungen dienen. Abweichend von der dargestellten Ausführung können die Stifte 41 und 42 auch um einen anderen Zentriwinkel zueinander versetzt sein.

Erfindungsgemäß läßt sich die Ausbildung weiterhin auch so treffen, daß ein die Kammer enthaltender Teil gesondert hergestellt wird. Dies kann u. a. fertigungstechnische Vorteile haben. Ein solcher, gewissermaßen einen Aufsatz oder Ansatz für den Bolzen bildender Teil läßt sich dann fest mit dem Bolzen verbinden. z. B. mit Hilfe einer Verstiftung, durch Schweißen oder auf andere geeignete Weise. Dabei kann z. B. der Bolzen mit seiner Stirnseite den Grund der sich anschließenden Kammer bilden. Zur Veranschaulichung einer solchen Ausführung kann auch die Fig. 1 betrachtet werden, wobei dann die ursprüngliche Trennungslinie zwischen dem Bolzen und einem Aufsatz- oder Ansatzteil etwa in Höhe der Oberkante der Hülse 34b zu denken wäre. Die Widerlager können bereits in dem gesondert hergestellten Aufsatz- oder Ansatzteil vorhanden sein oder auch nach dem Anbringen desselben am Bolzen erzeugt oder montiert werden. Es ist ferner möglich, einen gesondert gefertigten, die Kammer enthaltenden Teil lösbar an einem Bolzen festzulegen, insbesondere in einer einen regelrechten Adapter bildenden Ausführung mit entsprechender Anpassung und Verbindungsmöglichkeit an das Bolzenende. Bei allen vorstehend erwähnten Ausführungen, die sämtlich in den Rahmen der Erfindung fallen, kann der Aufsatz- oder Ansatzteil bzw. Adapter auch einen größeren Durchmesser als der Bolzen haben.

**Patentansprüche**

1. Vorrichtung zum Drehen und zumindest zeitweise gleichzeitigen Axialbewegen großer bzw. schwerer Schraubenbolzen (1), die zur lösbaren Befestigung von Deckeln oder anderen Verschlußteilen bei Druckbehältern, Reaktorgefäßen od. dgl. dienen und jeweils mit einem Ende in ein Aufnahmeloch einfügbar, namentlich in eine Gewindebohrung einschraubbar sind und außerdem ein Gewinde (2) zum Aufschrauben einer Befestigungsmutter (3) aufweisen, wobei am Endteil des Schraubenbolzens (1) eine von seiner Stirnseite her zugängliche Kammer (34) vorgesehen ist, in die der Kopf (33) eines drehend antreibbaren und axial verschiebbaren Kuppelteiles (30) in Axialrichtung des Schraubenbolzens (1) einführbar ist, und wobei am Endteil des Schraubenbolzens (1) axiale und radiale Widerlager (37a, 41, 42) für den Kopf (33) des Kuppelteiles (30) vorhanden sind, gekennzeichnet durch folgende Merkmale :

der Kopf (33) des Kuppelteiles (30) weist eine hammerkopfartige Ausbildung mit wenigstens einem festen, quer zur Längsachse (L) vorstehenden Ansatz (33a) auf,

die axialen und radialen Widerlager (37a, 41, 42) für den Kopf (33) bzw. Ansatz (33a) des Kuppelteiles (30) sind innerhalb der Kammer (34) vorgesehen,

ein erstes radiales Widerlager (41) erstreckt sich im wesentlichen über die ganze Höhe der Kammer (34) und ein zweites radiales Widerlager (42) erstreckt sich nur über einen Teil der Höhe der Kammer (34) in deren oberem Bereich, wobei die Widerlager (41, 42) einen das Einführen eines Ansatzes (33a) des Kopfes (33) des Kuppelteiles (30) zwischen sich zulassenden Abstand voneinander haben.

2. Vorrichtung nach Anspruch 1, dadurch gekennzeichnet, daß das axiale Widerlager (37a) für den Kopf (33) des Kuppelteiles (30) von einem stirnseitigen Abschlußteil (37) für die Kammer (34) gebildet ist, der eine ein axiales Hindurchführen des Kopfes (33) des Kuppelteiles (30) nur in bestimmter Winkelorientierung mit Bezug auf die Längsachse (L) gestattende Öffnung (38) aufweist.

3. Vorrichtung nach Anspruch 2, dadurch gekennzeichnet, daß der Abschlußteil (37) mit dem Ende des Bolzens (1) aus einem Stück besteht.

4. Vorrichtung nach einem der Ansprüche 2 und 3, dadurch gekennzeichnet, daß auf der Oberseite des Abschlußteiles (37) zur Öffnung (38) hin abgeschrägte Bereiche (39) vorgesehen sind.

5. Vorrichtung nach einem der Ansprüche 1 bis 4, dadurch gekennzeichnet, daß der Kopf (33) des Kuppelteiles (30) wenigstens an seinem unteren Ende abgeschrägte Bereiche (35) aufweist.

6. Vorrichtung nach einem der Ansprüche 1 bis 5, dadurch gekennzeichnet, daß wenigstens eines der radialen Widerlager von einem Stift (41 bzw. 42) od. dgl. gedildet ist.

7. Vorrichtung nach Anspruch 6, gekennzeichnet durch einen mit einem Ende in einem stirnseitigen Abschlußteil (37) der Kammer (34) und mit dem anderen Ende im Bolzen (1) am Grund (34a) der Kammer (34) gehaltenen Stift (41) od. dgl.

8. Vorrichtung nach Anspruch 6, gekennzeichnet durch einen in einem stirnseitigen Abschlußteil (37) der Kammer (34) gehaltenen Stift (42) od. dgl.

9. Vorrichtung nach einem der Ansprüche 1 bis 8, dadurch gekennzeichnet, daß außer den radialen Widerlagern (41, 42) in der Kammer (34) wenigstens ein Führungsanschlag (43) für den Kopf (33) des Kuppelteiles (30) vorgesehen ist.

10. Vorrichtung nach Anspruch 9, gekennzeichnet durch einen Stift (43) od. dgl. als Führungsanschlag.

11. Vorrichtung nach einem der Ansprüche 1 bis 10, dadurch gekennzeichnet, daß der Kuppelteil (30) einen sich an den Schaft (32) anschließenden Körper (31) mit einem Außenprofil (16) aufweist, der in einen drehend antreibbaren Mitnahmering (13) mit in das Außenprofil (16) des Körpers (31) passendem Innenprofil (15) einschiebbar ist, wobei die Öffnung (14) des Mitnahmeringes (13) so groß ist, daß sie ein Hindurchtreten des Kopfes (33) des Kuppelteiles (30) gestattet.

12. Vorrichtung nach einem der Ansprüche 1 bis 11, dadurch gekennzeichnet, daß die Kammer (34) in einem separaten Teil vorgesehen ist, der an einem Bolzen festlegbar ist.

**Claims**

1. A device for rotating and at least intermittently simultaneously axially moving large or heavy screw bolts (1) which are used for detachably securing covers or other closure members in pressure containers, reactor vessels or the like and can each be inserted at one end into a receiving hole, particularly can be screwed into a threaded bore and additionally comprise a thread (2) for screwing on a securing nut (3), the end portion of the screw bolt (1) being provided with a chamber (34) which is accessible from a front end and into which the head (33) of a rotatably drivable and axially displaceable coupling part (30) can be inserted in the axial direction of the screw bolt (1), axial and radial abutments (37a, 41, 42) for the head (33) of the coupling part (30) being provided on the end portion of the screw bolt (1), characterized by the following features :
the head (33) of the coupling part (30) has a hammerhead-like shape with at least one fixed projection (33a) protruding transversely to the longitudinal axis (L).
the axial and radial abutments (37a, 41, 42) for the head (33) or projection (33a) of the coupling part (30) are provided inside the chamber (34),
a first radial abutment (41) extends substantially over the entire height of the chamber (34) and a second radial abutment (42) extends only over part of the height of the chamber (34) in the upper region thereof, the abutments (41, 42) having between them a space which allows a projection (33a) of the head (33) of the coupling part (30) to be introduced between them.

2. A device according to claim 1, characterized in that the axial abutment (37) for the head (33) of the coupling part (30) is formed by a closing part (37) on the end face for the chamber (34), the closing part (37) having an aperture (38) which allows the head (33) of the coupling part (30) to be passed through axially only at a specific angular orientation with respect to the longitudinal axis (L).

3. A device according to claim 2, characterized in that the closing part (37) is integral with the end of the bolt (1).

4. A device according to one of claims 2 and 3, characterized in that regions (39) inclined towards the aperture (38) are provided on the top of the closing part (37).

5. A device according to any one of claims 1 to 4, characterized in that the head (33) of the coupling part (30) has inclined regions (35) at least at its lower end.

6. A device according to any one of claims 1 to 5, characterized in that at least one of the radial abutments is formed by a pin (41 or 42) or the like.

7. A device according to claim 6, characterized by a pin (41) or the like which is held at one end in a front-end closing part (37) of the chamber (34) and at the other end in the bolt (1) on the base (34a) of the chamber (34).

8. A device according to claim 6, characterized by a pin (42) or the like which is held in a front-end closing part (37) of the chamber (34).

9. A device according to any one of claims 1 to 8, characterized in that apart from the radial abutments (41, 42) in the chamber (34) at least one guide stop (43) for the head (33) of the coupling part (30) is provided.

10. A device according to claim 9, characterized by a pin (43) or the like as the guide stop.

11. A device according to any one of claims 1 to 10, characterized in that the coupling part (30) comprises a member (31) adjoining the shaft (32) and having an external profile (16) which can be inserted into a rotatably drivable entrainment ring (13) with an internal profile (15) adapted to the external profile (16) of the member (31), the aperture (14) of the entrainment ring (13) being sufficiently large to allow the head (33) of the coupling part (30) to pass through.

12. A device according to any one of claims 1 to 11, characterized in that the chamber (34) is provided in a separate part which can be secured on a bolt.

### Revendications

1. Dispositif pour faire tourner et pour déplacer axialement en même temps, au moins passagèrement, des goujons filetés (1), grands ou lourds, qui servent à fixer de manière démontable des couvercles ou autres organes d'obturation de récipients sous pression, cuves de réacteurs ou analogues et qui sont agencés de manière à pouvoir être introduits chacun par une extrémité dans un trou de réception, notamment à être vissés dans un trou fileté, et possèdent en outre un filetage (2) pour l'adaptation d'un écrou de fixation (3), le goujon fileté (1) possédant à son extrémité une chambre (34) qui est accessible par son côté frontal et dans laquelle peut être introduite, dans la direction axiale du goujon fileté (1), la tête (33) d'un organe d'accouplement (30) susceptible d'être entraîné en rotation et d'être déplacé axialement, des contre-appuis axiaux et radiaux (37a, 41, 42) étant prévus à l'extrémité du goujon fileté (1) pour la tête (33) de l'organe d'accouplement (30), caractérisé par les particularités suivantes :

la tête (33) de l'organe d'accouplement (30) est agencée à la manière d'une tête de marteau, avec au moins un talon fixe (33a), faisant saillie transversalement par rapport à l'axe longitudinal (L),

les contre-appuis axiaux et radiaux (37a, 41, 42) destinés à la tête (33) ou au talon (33a) de l'organe d'accouplement (30) sont ménagés à l'intérieur de la chambre (34),

un premier contre-appui radial (41) s'étend en substance sur toute la hauteur de la chambre (34) et un deuxième contre-appui radial (42) ne s'étend que sur une partie de la hauteur de la chambre (34), dans la région supérieure de celle-ci, ces contre-appuis (41, 42) ayant de l'un à l'autre une distance qui permet d'introduire entre eux un talon (33a) de la tête (33) de l'organe d'accouplement (30).

2. Dispositif selon la revendication 1, caractérisé en ce que le contre-appui axial (37a) destiné à la tête (33) de l'organe d'accouplement (30) est formé par un élément d'obturation frontal (37) de la chambre (34), qui possède une ouverture (38) ne permettant l'introduction axiale de la tête (33) de l'organe d'accouplement (30) que dans une orientation angulaire déterminée par rapport à l'axe longitudinal (L).

3. Dispositif selon la revendication 2, caractérisé en ce que l'élément d'obturation (37) est fait d'une seule pièce avec l'extrémité du goujon (1).

4. Dispositif selon l'une des revendications 2 et 3, caractérisé en ce que, sur sa face supérieure, l'élément d'obturation (37) comporte des zones (39) inclinées vers l'ouverture (38).

5. Dispositif selon l'une des revendications 1 à 4, caractérisé en ce que la tête (33) de l'organe d'accouplement (30) possède des zones inclinées (35), au moins à son extrémité inférieure.

6. Dispositif selon l'une des revendications 1 à 5, caractérisé en ce que l'un au moins des contre-appuis radiaux est constitué par une tige (41 ou 42) ou analogue.

7. Dispositif selon la revendication 6, caractérisé par une tige (41) ou semblable, maintenue par une extrémité dans un élément d'obturation frontal (37) de la chambre (34) et par l'autre extrémité dans le goujon (1) au fond (34a) de la chambre (34).

8. Dispositif selon la revendication 6, caractérisé par une tige (42) ou semblable, maintenue dans un élément d'obturation frontal (37) de la chambre (34).

9. Dispositif selon l'une des revendications 1 à 8, caractérisé en ce que, en plus des contre-appuis radiaux (41, 42), il comprend, dans la chambre (34), au moins une butée de guidage (43) pour la tête (33) de l'organe d'accouplement (30).

10. Dispositif selon la revendication 9, caractérisé par une tige (43) ou semblable en tant que butée de guidage.

11. Dispositif selon l'une des revendications 1 à 10, caractérisé en ce que l'organe d'accouplement (30) possède un corps (31) raccordé à la barre (32) et ayant un profil extérieur (16) agencé de façon à pouvoir être introduit dans une bague d'entraînement (13) qui est susceptible d'être entraînée en rotation et dont le profil intérieur (15) est adapté au profil extérieur (16) du corps (31), l'ouverture (14) de la bague d'entraînement (13) étant suffisamment grande pour permettre le passage de la tête (33) de l'organe d'accouplement (30).

12. Dispositif selon l'une des revendications 1 à 11, caractérisé en ce que la chambre (34) est ménagée dans une pièce séparée susceptible d'être assujettie à un goujon.

FIG. 1

FIG. 2

**0 129 717**

FIG. 4

FIG. 3